# EUROPÄISCHE PATENTSCHRIFT

(11) **EP 2 991 874 B1**
(45) Veröffentlichungstag und Bekanntmachung des Hinweises auf die Patenterteilung: **27.03.2019**
(21) Anmeldenummer: 14719732.1
(22) Anmeldetag: 24.04.2014
(51) Int. Cl.: B60W 40/02, B60W 30/08, B60W 50/06

(54) **BEREITSTELLEN EINER EFFIZIENTEN UMFELDKARTE FÜR EIN FAHRZEUG**
PROVISION OF AN EFFICIENT ENVIRONMENTAL MAP FOR A VEHICLE
FOURNITURE D'UNE CARTE D'ENVIRONNEMENT EFFICACE POUR UN VÉHICULE

(30) Priorität: 30.04.2013 DE 102013207904
(43) Veröffentlichungstag der Anmeldung: 09.03.2016
(73) Patentinhaber: Bayerische Motoren Werke Aktiengesellschaft, 80809 München (DE)
(72) Erfinder: HÖRWICK, Markus, 81379 München (DE); KORMANN, Oliver, 74360 Ilsfeld (DE); NEFF, Albrecht, 85716 Unterschleißheim (DE); WALESSA, Marc, 80999 München (DE)
(86) Internationale Anmeldenummer: PCT/EP2014/058325
(87) Internationale Veröffentlichungsnummer: WO 2014/177447

(56) Entgegenhaltungen:
- EP-A1- 1 612 580
- EP-A2- 2 028 072
- WO-A1-98/00728
- DE-A1- 19 845 568
- DE-A1-102006 061 390
- DE-A1-102009 040 295
- DE-A1-102010 011 629
- DE-A1-102010 018 994

## Beschreibung

Die Erfindung betrifft ein Verfahren zum Bereitstellen einer Umfeldkarte für ein Fahrzeug, eine entsprechende Vorrichtung und ein entsprechendes Computerprogramm.

In Zukunft werden Kraftfahrzeuge über eine Fülle von Fahrerassistenzsystemen verfügen, die den Fahrer vor Kollisionen warnen und gegebenenfalls auch durch Eingriffe versuchen Kollisionen zu vermeiden. Um diese Funktionen bereit zu stellen, ist für Fahrerassistenzsysteme die Kenntnis des Umfeldes des Fahrzeugs entscheidend. Um das Umfeld für Fahrerassistenzsysteme abzubilden ist bereits vorgeschlagen worden, Unterabschnitte des Umfeldes mithilfe von Sensoren zu untersuchen und deren Belegung oder Nicht-Belegung festzustellen, ggf. mit der Angabe einer Wahrscheinlichkeit der Belegung. Die Repräsentation des Umfeldes erfolgt dann durch eine sogenannte Umfeldkarte (manchmal auch Grid genannt), die Zellen umfasst, die jeweils wiederum den Unterabschnitten zugeordnet sind. Die Information zur Belegung des jeweiligen Unterabschnitts wird dann der entsprechenden Zelle zugeordnet. Die Belegungsinformation, die einer Zelle zugeordnet ist, wird typischerweise mithilfe eines Sensorsystems gewonnen, beispielsweise einem Ultraschallsensor oder einem Radar.

Die so gewonnene Umfeldkarte mit Belegungsinformationen kann als Grundlage für das hochautomatisierte Fahren dienen.

Die Umfeldkarte und deren Zellen mit zugeordneten Belegungswahrscheinlichkeiten werden im Fahrzeug und gegebenenfalls auch nach einer Übertragung in einem zentralen Server gespeichert.

Das Dokument EP 1 612 580 A1 offenbart ein Objekterkennungsverfahren für Fahrzeuge mit wenigstens einem Sensor, dessen Messwerte in ein frei programmierbares Grid G projiziert und zu Grid-basierten Segmenten zusammenfassbar sind.

Das Dokument DE 10 2010 011 629 A1 offenbart ein Verfahren zur Umgebungsrepräsentation eines Fahrzeugs, in dem Umgebungsdaten in hierarchischen Datenstrukturen abgelegt werden.

Das Dokument DE 198 45 568 A1 offenbart ein Verfahren zur Objekterfassung für Kraftfahrzeuge.

Das Dokument WO 98/00728 offenbart ein Warnsystem für Straßenfahrzeuge mit einem Hinderniserfassungssystem.

Aus dem Dokument DE 10 2006 061 390 A1 ist ein Umfelderfassungssystem bekannt, in dem eine Auswahleinheit einen ausgewählten Raumbereich des Umfelds ermittelt, über den bevorzugt Informationen benötigt werden. Eine Steuereinheit ist in der Lage, Sensorik so anzusteuern, dass Informationen über den ausgewählten Raumbereich erfasst werden. In diesem System werden nur für ausgewählte Bereiche einer unveränderlichen Umfeldkarte Belegungsinformationen ermittelt.

Aus dem Dokument DE 10 2011 113 016 A1 ist ein Verfahren zur Umgebungsrepräsentation eines Fahrzeugs bekannt, in dem Umgebungsdaten erfasst werden und in einer hierarchischen Datenstruktur abgelegt werden. Die Höhe des Detaillierungsgrades von Bereichen der Datenstruktur wird abhängig von Eigenschaften der dort identifizierten Objekte bestimmt. Der durch die Datenstruktur repräsentierte Abschnitt des Umfeldes des Fahrzeugs bleibt dabei gleich, es werden lediglich mehr Details für Bereiche des Umfeldes bereitgestellt, in denen Objekte identifiziert wurden.

Ein Nachteil der bestehenden Verfahren und Systeme für Umfeldkarten ist, dass diese große Datenmengen in Echtzeit erzeugen und verarbeiten müssen, trotz der in Fahrzeugen nur begrenzten Rechen- und Speicherkapazitäten.

Die der Erfindung zugrundeliegende Aufgabe ist es ein Verfahren aufzuzeigen, mit dem Umfeldkarten für Fahrzeuge, rechen- und speichereffizienter erzeugt und aktualisiert werden können.

Die Aufgabe der Erfindung wird durch die unabhängigen Patentansprüche gelöst. Vorteilhafte Weiterbildungen sind in den abhängigen Patentansprüchen definiert.

In einem Aspekt umfasst ein Verfahren zum Bereitstellen einer Umfeldkarte für ein Fahrzeug, wobei die Umfeldkarte einen Abschnitt des Umfelds repräsentiert und Zellen umfasst, die jeweils einem Unterabschnitt aus dem Abschnitt des Umfelds des Fahrzeugs zugeordnet sind, wobei jeder Zelle eine Belegungsinformation zugeordnet ist, die auf der Wahrscheinlichkeit der Anwesenheit eines Objekt oder eines Teils eines Objektes in dem der jeweiligen Zelle zugeordneten Unterabschnitt basiert; wobei das Fahrzeug eine Gruppe von mindestens zwei Fahrerassistenzsysteme umfasst, die jeweils dazu eingerichtet sind, einen aktiven und einen inaktiven Zustand einzunehmen und die im aktiven Zustand Belegungsinformationen über sich jeweils zumindest nicht vollständig überschneidende Abschnitte des Umfelds des Fahrzeugs benötigen; wobei das Verfahren umfasst: Bestimmen des bzw. derjenigen Fahrerassistenzsysteme, das bzw, die in aktivem Zustand ist bzw. sind; Bestimmen des Abschnitts des Umfelds, den die Umfeldkarte repräsentieren soll, basierend auf dem Abschnitt bzw. den Abschnitten, über den bzw. die das Fahrerassistenzsystem bzw. die Fahrerassistenzsysteme in aktivem Zustand Belegungsinformationen benötigt bzw. benötigen; Insbesondere umfasst der Abschnitt des Umfelds, den die Umfeldkarte repräsentieren soll, den bzw. die Abschnitte, über den bzw. die das Fahrerassistenzsystem bzw. die Fahrerassistenzsysteme in aktivem Zustand Belegungsinformationen benötigt bzw. benötigen.

Das Verfahren ermöglicht eine bedarfsgerechte Gestaltung der Umfeldkarte. Nur die Bereiche des Umfeldes, über die tatsächlich Informationen benötigt werden, werden durch Zellen der Umfeldkarte repräsentiert. Der durch die Umfeldkarte repräsentierte Abschnitt des Umfeldes ist somit nicht auf feste vorgegebene geometrische Formen beschränkt. Typischerweise waren dies im Stand der Technik rechteckige Formen. Stattdessen kann der Abschnitt beliebige geometrische Formen annehmen. Dies birgt den Vorteil, dass Abschnitte des Umfeldes, die von Fahrerassistenzsystemen nicht berücksichtigt würden, auch in der Speicherung und Verarbeitung der Umfeldkarte keine Kapazitäten beanspruchen. Die so frei werdenden Kapazitäten können dazu verwendet werden, die Abschnitte des Umfeldes, über die tatsächlich Belegungsinformationen benötigt werden, genauer darzustellen; beispielsweise durch eine feinere Auflösung (also kleinere Unterabschnitte) und/oder aussagekräftigere aber rechenintensivere Signalverarbeitungen. Die vorhandenen Speicher- und Rechenkapazitäten werden so effizienter eingesetzt.

Die entstehende Umfeldkarte kann als "Grid-Teppich" bezeichnet werden. Die Abschnitte, über die die jeweiligen Fahrerassistenzsysteme Belegungsinformationen benötigen, (manchmal auch Teilgrids genannt) können dabei unterschiedliche und situativ veränderliche Kantenlängen aufweisen sowie unterschiedliche und situativ veränderliche Größen und Form der Unterabschnitte (qudratisch, rechteckig, logarithmisch) und auch unterschiedliche und situativ veränderliche Dimensionen (1D, 2D, 2,5D, 3D). Die Zellgröße kann sich innerhalb eines Abschnitts exponentiell mit zunehmend mit der Entfernung vom Fahrzeug vergrößern, so dass im unmittelbaren Fahrzeugnähe eine höhere Zellendichte ist als in großer Entfernung des FAhrzeugs.

Die Abschnitte, über die die jeweiligen Fahrerassistenzsysteme Belegungsinformationen benötigen, können situativ plan auf dem Boden liegen oder im Raum "stehen" oder gewölbt sein.

Das Verfahren kann auch folgendes umfassen: Bereitstellen einer Speicherstruktur zur Aufnahme von Belegungsinformationen für die bestimmte Umfeldkarte. Die Speicherung der Belegungsinformationen kann in einer an die Umfeldkarte angepassten Datenstruktur geschehen. Beispielsweise können in einem ersten Speicherbereich Angaben zur Geometrie der Umfeldkarte abgelegt werden. Dies sind insbesondere die Beschreibung des äußeren Umrisses und eine gegebenenfalls generische mathematische oder sonstige allgemeine Beschreibung der Lage und Gestalt der Unterabschnitte, denen die Zellen zugeordnet sind. Die Zellen selbst können in einem zweiten Speicherbereich insbesondere mit einer fortlaufenden Nummerierung angelegt und identifiziert werden. Die Zellen können als Einträge in einer Datenbank oder Speicherstruktur aufgefasst werden. Die gesamte Datenbank oder Speicherstruktur kann dann die Umfeldkarte darstellen. Für Bereiche des Umfeldes, die nicht im repräsentierten Abschnitt liegen, werden keine Zellen und damit kein Speicherplatz vorgesehen. Das Verfahren kann weiterhin umfassen: Erfassen mithilfe von Sensoren von Belegungsinformationen für Unterabschnitte des Umfeldes; Speichern der Belegungsinformationen in der bereitgestellten Speicherstruktur.

In einer Fortbildung sind für jeden Abschnitt, über den ein Fahrerassistenzsystem im aktiven Zustand Belegungsinformationen benötigt, auch die Unterabschnitte vorgegeben, die in dem jeweiligen Abschnitt liegen. Das Verfahren umfasst dann ferner: Bestimmen der Unterabschnitte des Umfeldes, das die Umfeldkarte repräsentieren soll; In Bereichen, in denen sich Abschnitte überlappen, über die Fahrerassistenzsysteme im aktiven Zustand Belegungsinformationen benötigen: Wählen derjenigen vorgegebenen Unterabschnitte, die die kleineste Größe (also den kleinsten Flächeninhalt oder den kleinsten Umfang) aufweisen. In Bereichen, in denen keine Überlappung vorliegt, werden typischerweise Unterabschnitte gewählt, die in diesen Bereichen liegen oder ihnen am nächsten sind.

Häufig wird es vorkommen, dass Fahrerassistenzsysteme unterschiedliche räumliche Auflösungen der Belegungsinformationen benötigen und deshalb die Unterabschnitte für den Abschnitt des Umfeldes vorgeben, über den sie Belegungsinformationen benötigen. Die Vorgabe der Unterabschnitte kann durch die Definition der geometrischen Form und Lage der einzelnen Unterabschnitte erfolgen oder durch eine generische mathematische Formel oder mathematische Beschreibung. Bei der Bestimmung des Abschnitts des Umfeldes, den die Umfeldkarte repräsentieren soll und der typischerweise zumindest die Abschnitte umfasst, über die die aktiven Fahrerassistenzsysteme Belegungsinformationen benötigen, kann es zu Überlappungen kommen. Anders ausgedrückt: Die Abschnitte des Umfeldes, über die die aktiven Fahrerassistenzsysteme Belegungsinformationen benötigen, überschneiden sich typischerweise. In diesen Bereichen werden dann die Unterabschnitte gewählt, die die feinere Auflösung, also die kleinere Größe für die Unterabschnitte, bieten. Auf diese Weise wird die höchste Anforderung der Assistenzsysteme an die Auflösung berücksichtigt.

Weiterhin kann es bei Überlappungen von Abschnitten vorkommen, dass die Kanten von Abschnitten oder Unterabschnitten eines Assistenzsystem nicht mit den Kanten von Abschnitten oder Unterabschnitten eines anderes Assistenzsystem zusammenfallen. In diesem Fall kann vorgesehen sein, die bei einem Abschnitt entstehenden Rest-Unterabschnitte beizubehalten, um die Regelmäßigkeit des überdeckten und fortzuführenden Abschnitts (also des Abschnitts mit der größeren Größe der Unterabschnitte) beizubehalten. Alternativ können die Abschnitte, über die die Fahrerassistenzsysteme im aktiven Zustand Belegungsinformationen benötigen, auch derart festgelegt werden, dass die Begrenzungen von Abschnitten mit kleineren Unterabschnitten mit den Kanten von Unterabschnitten von Abschnitten mit größeren Unterabschnitten zusammenfallen.

In einer Weiterbildung basiert das Bestimmen der Belegungsinformation, die einer Zelle der Umfeldkarte zugeordnet ist, auf Messungen eines ersten Sensors und auf Messungen eines zweiten Sensors. Die Informationen, die von zwei verschiedenen Sensoren, typischerweise von zwei verschiedenen Sensorsystemen, erhalten werden, werden so in einer Belegungsinformation zusammengeführt. Als erster oder zweiter Sensoren für das Umfeld können beispielsweise eine Kamera, ein Ultraschallsensor, ein Radar, ein Lidar, ein Infrarotsensor oder ähnliche Sensoren zum Einsatz kommen.

In einer anderen Weiterbildung umfasst das Verfahren ferner: Empfangen der Bewegungsrichtung des Fahrzeugs; wobei das Bestimmen des Abschnitts des Umfelds, den die Umfeldkarte repräsentieren soll, zusätzlich abhängig ist von der empfangenen Bewegungsrichtung des Fahrzeugs. Fahrerassistenzsysteme können für verschiedene Bewegungsrichtungen des Fahrzeugs, beispielsweise für Vorwärtsfahrten als auch für Rückwärtsfahrten, ausgelegt sein. Generell benötigt ein solches Fahrerassistenzsystem deshalb Belegungsinformationen von Abschnitten des Umfeldes vor dem Fahrzeug als auch von Abschnitten des Umfeldes hinter dem Fahrzeug. Jedoch benötigt das Fahrerassistenzsystem die Belegungsinformationen für Vorwärtsfahrten nicht gleichzeitig mit den Belegungsinformationen für Rückwärtsfahrten. Abschnitte des Umfeldes, die nur für eine bestimmte Bewegungsrichtung des Fahrzeugs, beispielsweise für Rückwärtsfahrten, benötigt werden, können bei Vorwärtsfahrten des Fahrzeuges nicht mit in die Umfeldkarte aufgenommen werden. Die so entstandene Umfeldkarte repräsentiert dann die Abschnitte des Umfeldes, die nicht für die derzeitige Bewegungsrichtung benötigt werden, nicht.

In einer Verfeinerung umfasst das Verfahren insbesondere das Bestimmen der geometrischen Gestalt jedes Unterabschnitts, insbesondere in Abhängigkeit der empfangenen Bewegungsrichtung. Die Anpassung der Umfeldkarte kann somit weiterhin derart geschehen, dass auch die Unterabschnitte des Umfeldes an die Bewegungsrichtung angepasst werden. Typischerweise weisen alle Unterabschnitte des Standes der Technik stets die gleiche geometrische Form auf, beispielsweise ist jeder Unterabschnitt quadratisch oder rechteckig. In dem erfindungsgemäßen Verfahren kann statt dessen vorgesehen sein, Unterabschnitten für eine Bewegungsrichtung eine geometrische Form zu geben und für eine andere Bewegungsrichtung eine andere geometrische Form. Beim Vorwärtsfahren können so beispielsweise das Umfeld in längliche Rechtecke als Unterabschnitte aufgeteilt werden, während beim Rückwärtsfahren das Umfeld in Quadrate unterteilt wird. Eine Anwendung hierfür wäre beispielsweise beim Einparken, bei dem eine feinere Unterteilung des Umfeldes in Rückwärtsrichtung besonders hilfreich ist, da die Sicht für den Fahrer in Rückwärtsrichtung häufig eingeschränkter ist als in Vorwärtsrichtung.

In einer Weiterbildung umfasst das Verfahren ferner das Empfangen des Lenkwinkels von Rädern des Fahrzeugs; wobei das Bestimmen des Abschnitts des Umfelds, den die Umfeldkarte repräsentieren soll, zusätzlich abhängig ist von dem empfangenen Lenkwinkel des Fahrzeugs. Ein solches Vorgehen ist insbesondere dann sinnvoll, wenn ein Fahrerassistenzsystem beispielsweise Belegungsinformationen für den Abschnitt des zukünftigen Fahrtverlaufes benötigt. Anstatt den repräsentierten Abschnitt des Umfeldes derart zu wählen, dass alle möglichen Kurvenfahrten durch die Umfeldkarte abgedeckt werden, wird je nach Lenkwinkel (und damit Kurvenfahrt) nur der Abschnitt des Umfeldes repräsentiert, der beim derzeitigen Lenkwinkel durchfahren wird, ggf. etwas verbreitert für unvorhersehbare Abweichungen während der Kurvenfahrt. Der Abschnitt des Umfeldes kann beispielsweise ein entsprechend dem Lenkwinkel gebogenes Rechteck sein. Auf diese Weise wird der repräsentierte Abschnitt des Umfeldes auf den Bereich verkleinert, der tatsächlich für Fahrerassistenzsysteme relevant ist. Die im Fahrzeug vorhandenen Rechenressourcen und vorhandene Speicherkapazität kann effizienter eingesetzt werden. In einer Fortbildung kann das Verfahren ferner umfassen: Bestimmen der geometrischen Gestalt jedes Unterabschnitts, insbesondere in Abhängigkeit des empfangenen Lenkwinkels. Beispielsweise können die Unterabschnitte entsprechend dem zukünftigen Fahrweg bei derzeitigem Lenkwinkel gekrümmte Rechtecke sein und die geometrische Form des repräsentierten Abschnittes verkleinert aufgreifen. Auf diese Weise wird eine vereinfachte Zuordnung von Zellen der Umfeldkarte zu den Unterabschnitten ermöglicht.

In einer anderen Weiterbildung umfasst das Verfahren ferner das Erkennen von Objekten im Umfeld des Fahrzeugs; wobei das Bestimmen des Abschnitts des Umfelds, den die Umfeldkarte repräsentieren soll, zusätzlich abhängig ist von den erkannten Objekten im Umfeld des Fahrzeugs. Auf diese Weise wird es ermöglicht, dort, wo sich Objekte befinden, den repräsentierten Abschnitt des Umfeldes zu vergrößern. Wird beispielsweise ein Teil eines Objektes von dem repräsentierten Abschnitt erkannt und das Objekt beispielsweise als ein anderer Verkehrsteilnehmer erkannt oder dies vermutet, so kann der repräsentierte Abschnitt des Umfeldes ausgedehnt werden, so dass sich dieser Verkehrsteilnehmer vollständig im repräsentierten Abschnitt des Umfeldes befindet. Dies ermöglicht den mit anderen Verkehrsteilnehmern befassten Assistenzsystemen eine bessere Verfolgung und Analyse der ansonsten nicht vollständig repräsentierten Verkehrsteilnehmer. Dieser Gedanke kann auch auf die geometrische Gestalt jedes Unterabschnitts übertragen werden.

Das Verfahren umfasst dann ferner: Bestimmen der geometrischen Gestalt jedes Unterabschnitts, insbesondere in Abhängigkeit von erkannten Objekten im Umfeld des Fahrzeugs. Beispielsweise können die Unterabschnitte in dem Abschnitt des Umfeldes kleiner gewählt werden, in dem ein Objekt erkannt wurde, um die Klassifikation oder Verfolgung des Objektes genauer zu ermöglichen. Dies ermöglicht den Einsatz von Rechen- und Speicherkapazitäten dort, wo Fahrerassistenzsysteme besonders davon profitieren.

In einer anderen Weiterbildung umfasst die Umfeldkarte mindestens zwei Ebenen, wobei jede Ebene einen Abschnitt des Umfelds repräsentiert und Zellen umfasst, die jeweils einen Unterabschnitt aus dem jeweiligen Abschnitt des Umfelds des Fahrzeugs repräsentieren, wobei jeder Zelle eine Belegungsinformation zugeordnet ist, die auf der Wahrscheinlichkeit der Anwesenheit eines Objekts oder eines Teils eines Objektes in dem der jeweiligen Zelle zugeordneten Unterabschnitt basiert; wobei das Verfahren ferner umfasst: Bestimmen der Belegungsinformation für jede Zelle, insbesondere wobei die Belegungsinformation für Zellen einer Ebene basierend auf Messungen von einem von mindestens zwei (unterschiedlichen) Sensorsystemen basiert. Auf diese Weise wird es ermöglicht, dass ein Abschnitt des Umfeldes mehrmals, beispielsweise zweimal, repräsentiert wird, jeweils auf einer Ebene. Dies kann zur Separierung der Belegungsinformationen von Sensoren dienen. Beispielsweise können die Belegungsinformationen von Ultraschallsensoren Zellen einer ersten Ebene zugeordnet werden und Belegungsinformationen über denselben Abschnitt des Umfeldes von Kamerasensoren einer zweiten Ebene. Darüber hinaus können die Belegungsinformationen von Gruppen von Sensoren Ebenen zugeordnet werden. Den Zellen einer bestimmten Ebene kann so die Zusammenfassung von Belegungsinformationen von mindestens zwei Sensoren zugewiesen werden. Darüber hinaus ermöglicht dies, dass Belegungsinformationen desselben Sensors in Zellen verschiedener Ebenen zugewiesen werden. Die Belegungsinformationen können so mehrmals verwendet werden. Die Zusammenfassung und Auswahl von Belegungsinformationen verschiedener Sensoren für eine Ebene kann so den Anforderungen eines Fahrerassistenzsystems an die Umfeldkarte gerecht werden.

Insofern kann vorgesehen sein, dass in dem Verfahren Belegungsinformation von einer ersten Gruppe an Sensoren, deren Erzeugung ungefähr dieselbe erste Zeitspanne in Anspruch nimmt, den Zellen einer ersten Ebene zugewiesen wird. Belegungsinformation von einer zweiten Gruppe an Sensoren, deren Erzeugung wiederum eine zweite Zeitspanne in Anspruch nimmt, den Zellen einer zweiten Ebene zugewiesen wird. Auf diese Weise können bei begrenzter Rechen- und Speicherkapazität Abstufungen bezüglich der Echtzeitbereitstellung von Belegungsinformationen von verschiedenen Sensoren vorgenommen werden. Daten derjenigen Sensoren, die eine längere Verarbeitungszeit benötigen, werden nicht so häufig bereitgestellt, wie die Daten derjenigen Sensoren, die eine kürzere Verarbeitungszeit benötigen.

In einem anderen Aspekt umfasst eine Vorrichtung elektronische Verarbeitungsmittel und mindestens eine Schnittstellen zu einem Sensorsystem, wobei die Vorrichtung dazu eingerichtet ist, eines der oben beschriebenen Verfahren auszuführen. Die elektronischen Verarbeitungsmittel können ein Computer, ein Mikrocontroller, dedizierte Schaltkreise oder ähnliches sein. Die elektronischen Verarbeitungsmittel können programmtechnisch zur Ausführung eines der dargestellten Verfahren eingerichtet sein.

In einem anderen Aspekt ist ein Computerprogramm dazu eingerichtet bei dessen Ausführung einen Computer zur Ausführung eines der dargestellten Verfahren zu veranlassen. Zu diesem Zweck kann das Computerprogramm maschinenlesbare Anweisungen umfassen.

### KURZE BESCHREIBUNG DER ZEICHNUNGEN

Fig. 1 bis 4 zeigen schematisch Abschnitte des Umfelds, über die aktive Fahrerassistenzsysteme Belegungsinformationen benötigen.
Fig. 5 zeigt schematisch einen Abschnitt eines Umfeldes, der durch eine Umfeldkarte repräsentiert wird, gemäß einem Ausführungsbeispiel.
Fig. 6 zeigt schematisch eine Umfeldkarte für ein Fahrzeug bei einer Rückwärtsfahrt des Fahrzeugs gemäß einem Ausführungsbeispiel.
Fig. 7 zeigt schematisch eine Umfeldkarte für ein Fahrzeug bei einer Kurvenfahrt gemäß einem Ausführungsbeispiel.
Fig. 8a und 8b zeigen schematisch eine in Ebenen aufgeteilte Umfeldkarte gemäß einem Ausführungsbeispiel.

Gleiche Bezugszeichen beziehen sich auf sich entsprechende Elemente über die Figuren hinweg.

### DETAILLIERTE BESCHREIBUNG DES AUSFÜHRUNGSBEISPIELS

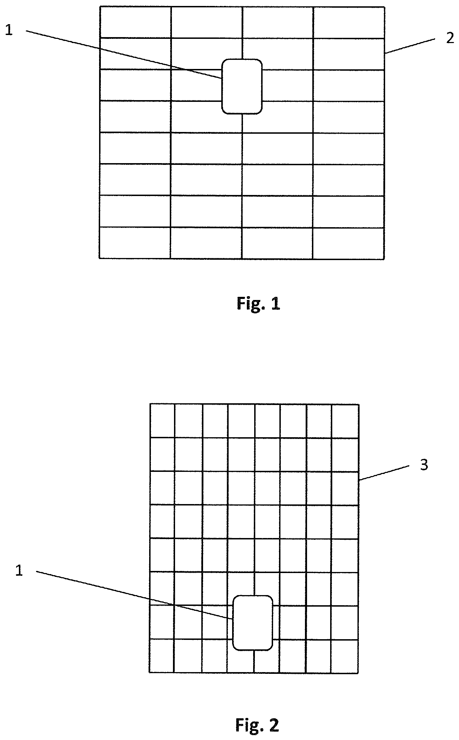

Fig. 1 bis 5 zeigen schematisch Umfeldkarten für ein Fahrzeug 1.

In Fig. 1 wird schematisch der Abschnitt 2 des Umfeldes gezeigt, über den ein aktiver Kollisionswarner für seitlichen und hinteren Verkehr Belegungsinformationen benötigt. Ebenfalls eingezeichnet sind die Unterabschnitte.

In Fig. 2 wird schematisch der Abschnitt 3 des Umfeldes gezeigt, über den ein aktiver Parkassistent Belegungsinformationen benötigt. Ebenfalls eingezeichnet sind die Unterabschnitte, die kleiner sind, als die des in Fig. 1 gezeigten Abschnitts 2 für einen Kollisionswarner.

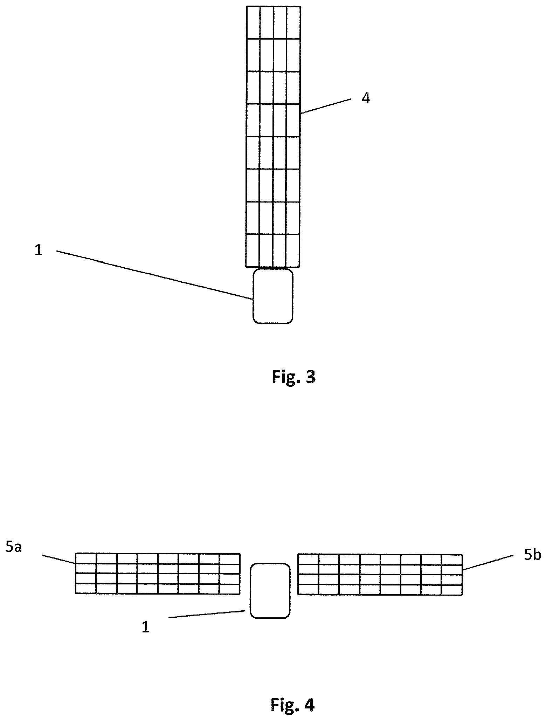

In Fig. 3 wird schematisch der Abschnitt 4 des Umfeldes gezeigt, über den ein aktiver Fahrspurassistent für Autobahnfahrten Belegungsinformationen benötigt. Ebenfalls eingezeichnet sind die Unterabschnitte, die kleiner sind, als die des in Fig. 1 gezeigten Abschnitts 2 für einen Kollisionswarner und die des in Fig. 2 gezeigten Abschnitts für den Parkassistent.

In Fig.4 werden schematisch die Abschnitte 5a und 5b des Umfeldes gezeigt, über die ein aktiver Side-View Assistent Belegungsinformationen benötigt. Ebenfalls eingezeichnet sind die Unterabschnitte, die kleiner sind, als die des in Fig. 1 gezeigten Abschnitts 2 für einen Kollisionswarner und die des in Fig. 2 gezeigten Abschnitts für den Parkassistent. Die Abschnitte 5a und 5b sind hier logisch unterteilt dargestellt, können aber als ein Abschnitt aufgefasst werden.

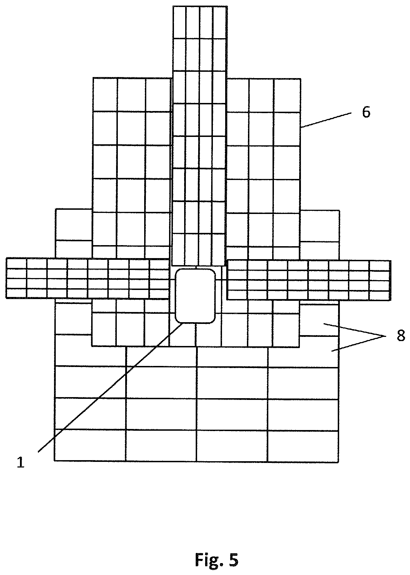

Fig. 5 stellt aufbauend auf den Beispielen der Fig. 1 bis 4 den Abschnitt 6 des Umfeldes dar, der durch eine Umfeldkarte repräsentiert wird, gemäß einem Ausführungsbeispiel. In diesem Beispiel ist der Kollisionswarner für seitlichen und hinteren Verkehr, der Parkassistent, der Fahrspurassistent für Autobahnfahrten und der Side-View Assistent eines Fahrzeugs gleichzeitig aktiviert. Für diese aktivierten Fahrerassistenzsysteme wird der Abschnitt des Umfeldes bestimmt, den die Umfeldkarte repräsentieren soll, hier der Abschnitt 6. Dies geschieht durch Übernahme der von den Fahrerassistenzsystemen vorgegebenen Abschnitten und Unterabschnitten. Der Abschnitt 6 des Umfeldes wird durch 20 Kanten begrenzt und wird durch Unterabschnitte von vier verschiedenen Größen gebildet. In dem Bereich, in dem sich der Abschnitt des Kollisionswarners mit dem des Parkassistenten überlappt wird die Größe der Unterabschnitte durch die Größe der Unterabschnitte des Parkassistenten vorgegeben, da diese letzte Größe die kleinere ist. Dabei werden Unterabschnitte des Kollisionswarners nur teilweise überdeckt, einige von diesen sind beispielhaft mit der Bezugsziffer 8 versehen. Diese Rest-Unterabschnitte (also die nicht überdeckten Bereiche der Unterabschnitte des Kollisionswarners) werden jedoch beibehalten, um die Regelmäßigkeit der Unterabschnitte des Kollisionswarners beizubehalten. In dem vorliegenden Beispiel der Fig. 5 werden also die Abschnitte und auch die geometrische Form und Lage der Unterabschnitte von den Vorgaben der einzelnen Fahrerassistenzsystemen übernommen, wobei bei Überlappungen die Auflösung entscheidet, die Vorgaben welches Assistenzsystems entscheidend sind. Im vorliegenden Beispiel repräsentiert die Umfeldkarte nicht mehr als durch die Abschnitte der Fahrerassistenzsysteme vorgegeben.

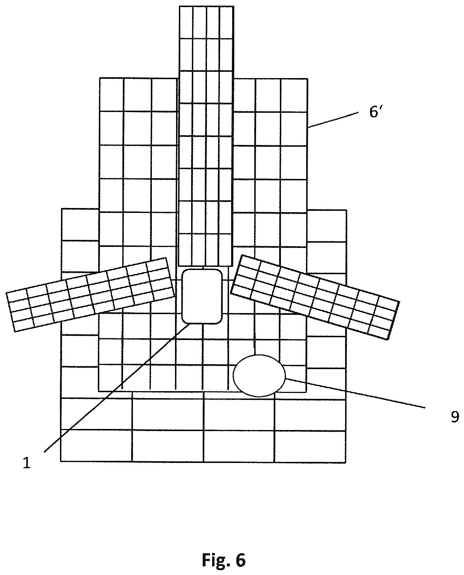

Fig. 6 zeigt schematisch eine situative Anpassung des von der Umfeldkarte repräsentierten Abschnitts 6' des Umfeldes gemäß einem Ausführungsbeispiel, aufbauend auf dem Beispiel der Fig. 5. In dem in Fig. 6 gezeigten Beispiel wurde ein Hindernis 9, beispielsweise ein Baum, im rückwärtigen Bereich des Fahrzeugs 1 erkannt. Aufgrund dieser Erkennung wurden die Unterabschnitte in diesem Bereich angepasst. Da diese Erkennung hauptsächlich für den Parkassistenten von Bedeutung ist, wurde der Abschnitt, über den der Parkassistent in aktivem Zustand Belegungsinformationen benötigt, vergrößert, und zwar in Richtung des Hindernisses 9. Dazu wurden zwei neue Reihen Unterabschnitte definiert, deren Größe sich leicht von der der übrigen Unterabschnitte des Abschnitts des Parkassistenten unterscheidet. Diese Größenänderung der Unterabschnitte kann auch logarithmisch ausgeführt werden.

Gleichzeitig befindet sich das Fahrzeug 1 in dem in Fig. 6 gezeigten Beispiel in einer Rückwärtsfahrt. Aus diesem Grund wurden die Abschnitte für den Side-View Assistenten im der Winkelausrichtung im Vergleich zum Fahrzeug 1 zum rückwärtigen Bereich des Fahrzeugs gedreht.

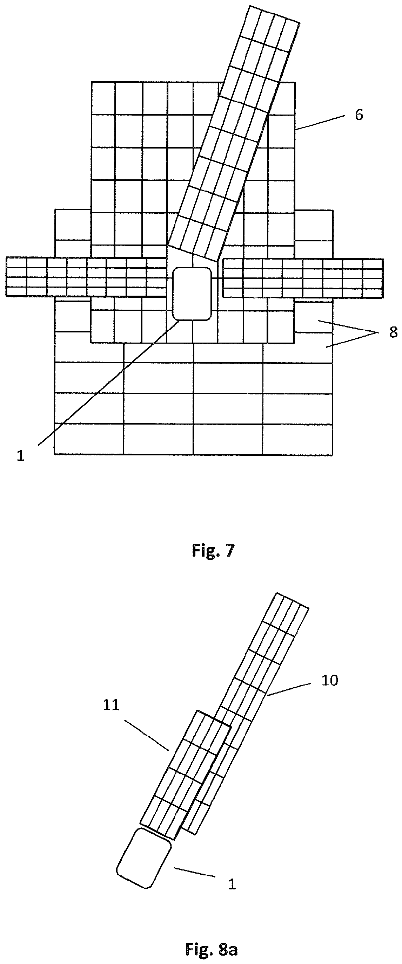

Fig. 7 zeigt schematisch eine Umfeldkarte für ein Fahrzeug bei einer Kurvenfahrt gemäß einem Ausführungsbeispiel. In diesem Beispiel wird der Lenkwinkel des Fahrzeugs festgestellt. Der Abschnitt des Umfeldes, über den der Fahrspurassistent Belegungsinformationen benötigt, wird entsprechend des zu erwartenden Fahrweges gedreht. In Fig. 7 ist dieser Abschnitt nur gedreht, denkbar wäre auch ein Verlauf entlang des tatsächlich gefahrenen Pfades, also entlang eines Kreisbogens.

Fig. 8a demonstriert schematisch die Aufteilung der Umfeldkarte in Ebenen gemäß einem Ausführungsbeispiel. Wenn der Fahrspurassistent aktiv ist, werden von diesem für einen vorausliegenden Abschnitt des Umfeldes Belegungsinformationen benötigt. Diese Belegungsinformationen werden in dem vorliegenden Beispiel der Fig. 8a mithilfe von Radar-Sensoren und Stereo-Video-Kameras gewonnen. Die Daten von Radar-Sensoren reichen weiter als die von Stereo-Video-Kameras. In Fig. 8a ist der Abschnitt, der durch Radar-Daten repräsentiert werden kann mit dem Bezugszeichen 10 bezeichnet. Der Abschnitt, der durch die Stereo Kameras repräsentiert werden kann ist mit dem Bezugszeichen 11 bezeichnet. Für den Abschnitt 10 liefern die Sensordaten nur 2D Aussagen, während sie für den Abschnitt 11 3D Aussagen liefern, also für jede Zelle neben der Belegungswahrscheinlichkeit auch Höheninformationen. Allerdings reicht die Messung der Stereo Kamera nicht so weit wie die Messungen des Radars. Dies ist in Fig. 8a dadurch angedeutet, dass Abschnitt 11 kürzer ist. Beide Abschnitte liegen in unterschiedlichen Ebenen und für jede Ebene existiert eine Umfeldkarte mit eigenen Zellen, denen die Belegungswahrscheinlichkeiten zugewiesen sind. Daten unterschiedlicher Sensoren werden in unterschiedliche Ebenen aufgenommen.

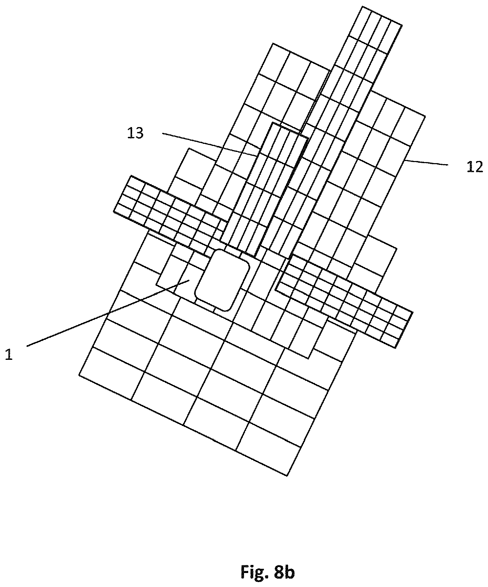

Fig. 8b zeigt den Gesamtkontext der resultierenden Umfeldkarte mit zwei Ebenen, die die in Fig. 8a gezeigten Abschnitte umfasst. In der ersten (hier als unten liegend dargestellten) Ebene wird der Abschnitt 12 repräsentiert, der den in Fig. 8a gezeigten Abschnitt 10 umfasst. Die zweite Ebene 13 (hier als oben liegend dargestellt) umfasst den Abschnitt 11 aus Fig. 8a. Bei der Bestimmung der Abschnitte in den einzelnen Ebenen wird das zuvor vorgestellte Verfahren angewandt, so dass nur diejenigen Abschnitte des Umfelds repräsentiert werden, für die Belegungsinformationen benötigt werden. Zusätzlich werden Sensordaten von verschiedenen Sensoren für dieselben oder zumindest überlappende Abschnitte in unterschiedliche Ebenen der Umfeldkarte separiert.

Falls für den in Fig. 2 mit dem Bezugszeichen 3 bezeichneten Abschnitt ebenfalls Messdaten von zwei Sensoren vorliegen, können diese Messdaten ebenfalls in der zweiten Ebene repräsentiert werden. Dabei werden sich die beiden Abschnitte für den Fahrspurassistent und den Parkassistent überlappen und zu einem Abschnitt zusammengefasst, wie zuvor erläutert. Ein Beispiel für zwei verschiedene Sensoren für den Parkassistent können Ultraschallsensoren mit 2D Daten und Stereo-VideoDaten sein, insbesondere mit 2,5D Daten.

## Patentansprüche

1. Verfahren zum Bereitstellen einer Umfeldkarte für ein Fahrzeug,
wobei die Umfeldkarte einen Abschnitt (6) des Umfelds repräsentiert und Zellen umfasst, die jeweils einem Unterabschnitt (8) aus dem Abschnitt (6) des Umfelds des Fahrzeugs (1) zugeordnet sind,
wobei jeder Zelle eine Belegungsinformation zugeordnet ist, die auf der Wahrscheinlichkeit der Anwesenheit eines Objektes oder eines Teils eines Objektes in dem der jeweiligen Zelle zugeordneten Unterabschnitt (8) basiert;
wobei das Fahrzeug (1) eine Gruppe von mindestens zwei Fahrerassistenzsysteme umfasst, die jeweils dazu eingerichtet sind, einen aktiven und einen inaktiven Zustand einzunehmen und die im aktiven Zustand Belegungsinformationen über sich jeweils zumindest nicht vollständig überschneidende Abschnitte des Umfelds des Fahrzeugs benötigen;
wobei das Verfahren umfasst:
Bestimmen des bzw. derjenigen Fahrerassistenzsysteme, das bzw. die in aktivem Zustand ist bzw. sind;
Bestimmen des Abschnitts (6) des Umfelds, den die Umfeldkarte repräsentieren soll, basierend auf dem Abschnitt bzw. den Abschnitten, über den bzw. die das Fahrerassistenzsystem bzw. die Fahrerassistenzsysteme in aktivem Zustand Belegungsinformationen benötigt bzw. benötigen;
Insbesondere umfasst der Abschnitt (6) des Umfelds, den die Umfeldkarte repräsentieren soll, den bzw. die Abschnitte, über den bzw. die das Fahrerassistenzsystem bzw. die Fahrerassistenzsysteme in aktivem Zustand Belegungsinformationen benötigt bzw. benötigen.

2. Verfahren nach Anspruch 1,
wobei für jeden Abschnitt, über den ein Fahrerassistenzsystem im aktiven Zustand Belegungsinformationen benötigt, auch die Unterabschnitte (8) vorgegeben sind, die in dem jeweiligen Abschnitt liegen;
wobei das Verfahren ferner umfasst:
Bestimmen der Unterabschnitte (8) des Umfeldes, das die Umfeldkarte repräsentieren soll;
In Bereichen, in denen sich Abschnitte überlappen, über die Fahrerassistenzsysteme im aktiven Zustand Belegungsinformationen benötigen: Wählen derjenigen vorgegebenen Unterabschnitte (8), die die kleinste Größe aufweisen.

3. Verfahren nach einem der vorhergehenden Ansprüche, ferner umfassend:
Bestimmen der Belegungsinformation, die einer Zelle der Umfeldkarte zugeordnet ist, basierend auf Messungen eines ersten Sensors und auf Messungen eines zweiten Sensors.

4. Verfahren nach einem der vorhergehenden Ansprüche, ferner umfassend:
Empfangen der Bewegungsrichtung des Fahrzeugs (1);
wobei das Bestimmen des Abschnitts (6) des Umfelds, den die Umfeldkarte repräsentieren soll, zusätzlich abhängig ist von der empfangenen Bewegungsrichtung des Fahrzeugs (1);
wobei das Verfahren insbesondere ferner umfasst:
Bestimmen der geometrischen Gestalt jedes Unterabschnitts (8), insbesondere in Abhängigkeit der empfangenen Bewegungsrichtung.

5. Verfahren nach einem der vorhergehenden Ansprüche, ferner umfassend:
Empfangen des Lenkwinkels von Rädern des Fahrzeugs (1);
wobei das Bestimmen des Abschnitts (6) des Umfelds, den die Umfeldkarte repräsentieren soll, zusätzlich abhängig ist von dem empfangenen Lenkwinkel des Fahrzeugs (1);
wobei das Verfahren insbesondere ferner umfasst:
Bestimmen der geometrischen Gestalt jedes Unterabschnitts (8), insbesondere in Abhängigkeit des empfangenen Lenkwinkels.

6. Verfahren nach einem der vorhergehenden Ansprüche, ferner umfassend:
Empfangen der Geschwindigkeit des Fahrzeugs (1);
wobei das Bestimmen des Abschnitts (6) des Umfelds, den die Umfeldkarte repräsentieren soll, zusätzlich abhängig ist von der empfangenen Geschwindigkeit des Fahrzeugs (1);
wobei das Verfahren insbesondere ferner umfasst:
Bestimmen der geometrischen Gestalt jedes Unterabschnitts (8), insbesondere in Abhängigkeit der empfangenen Geschwindigkeit.

7. Verfahren nach einem der vorhergehenden Ansprüche, ferner umfassend:
Erkennen von Objekten im Umfeld des Fahrzeugs (1);
wobei das Bestimmen des Abschnitts (6) des Umfelds, den die Umfeldkarte repräsentieren soll, zusätzlich abhängig ist von den erkannten Objekten im Umfeld des Fahrzeugs (1).
wobei das Verfahren insbesondere ferner umfasst:
Bestimmen der geometrischen Gestalt jedes Unterabschnitts (8), insbesondere in Abhängigkeit von erkannten Objekten im Umfeld des Fahrzeugs (1).

8. Verfahren nach einem der vorhergehenden Ansprüche,
wobei die Umfeldkarte mindestens zwei Ebenen umfasst, wobei jede Ebene einen Abschnitt (6) des Umfelds repräsentiert und Zellen umfasst, die jeweils einen Unterabschnitt (8) aus dem jeweiligen Abschnitt des Umfelds des Fahrzeugs repräsentieren,
wobei jeder Zelle eine Belegungsinformation zugeordnet ist, die auf der Wahrscheinlichkeit der Anwesenheit eines Objekts oder eines Teils eines Objektes in dem der jeweiligen Zelle zugeordneten Unterabschnitt basiert;
wobei das Verfahren ferner umfasst:
Bestimmen der Belegungsinformation für jede Zelle, insbesondere wobei die Belegungsinformation für Zellen einer Ebene basierend auf Messungen von einem von mindestens zwei Sensorsystemen basiert.

9. Vorrichtung, umfassend elektronische Verarbeitungsmittel und mindestens eine Schnittstellen zu einem Sensorsystem, wobei die Vorrichtung dazu eingerichtet ist, eines der vorstehenden Verfahren auszuführen.

10. Computerprogramm, das bei Ausführung durch einen Computer, den Computer zur Ausführung eines Verfahrens nach einem der Ansprüche 1 bis 8 veranlasst.

## Claims

1. A method for providing an environmental map for a vehicle,
wherein the environmental map represents a portion (6) of the environment and comprises cells which are each associated with a sub-portion (8) from the portion (6) of the environment of the vehicle (1),
wherein each cell is associated with occupancy information which is based on the probability of the presence of an object or part of an object in the sub-portion (8) associated with the cell in question; wherein the vehicle (1) comprises a group of at least two driver assistance systems, which are each designed to assume an active and inactive state and which in the active state require occupancy information regarding portions of the environment of the vehicle which at least do not overlap completely;
wherein the method comprises the following steps:
determining the driver assistance system(s) which is (are) in the active state;
determining the portion (6) of the environment that the environmental map is intended to represent, on the basis of the portion or portions for which the driver assistance system or the driver assistance systems requires or require occupancy information in the active state;
more especially, the portion (6) of the environment that the environmental map is intended to represent comprises the portion or portions for which the driver assistance system or the driver assistance systems requires or require occupancy information in the active state.

2. A method according to claim 1,
wherein, for each portion for which a driver assistance system in the active state requires occupancy information, the sub-portions (8) which lie in the portion in question are also specified;
wherein the method further comprises the following steps:
determining the sub-portions (8) of the environment that the environmental map is intended to represent;
in areas in which portions for which the driver assistance systems in the active state require occupancy information overlap: selecting the specified sub-portions (8) that have the smallest size.

3. A method according to either one of the preceding claims, further comprising the following step:
determining the occupancy information that is associated with a cell of the environmental map, on the basis of measurements of a first sensor and measurements of a second sensor.

4. A method according to any one of the preceding claims, further comprising the following step:
receiving the direction of movement of the vehicle (1);
wherein the determination of the portion (6) of the environment that the environmental map is intended to represent is additionally dependent on the received direction of movement of the vehicle (1);
wherein the method more especially further comprises the following step:
determining the geometric design of each sub-portion (8), more especially depending on the received direction of movement.

5. A method according to any one of the preceding claims, further comprising the following step:
receiving the steering angle of wheels of the vehicle (1);
wherein the determination of the portion (6) of the environment that the environmental matters intended to represent is additionally depending on the received steering angle of the vehicle (1);
wherein the method more especially further comprises the following step:
determining the geometric design of each sub-portion (8), more especially depending on the received steering angle.

6. A method according to any one of the preceding claims, further comprising the following step:
receiving the speed of the vehicle (1);
wherein the determination of the portion (6) of the environment that the environmental map is intended to represent is additionally dependent on the received speed of the vehicle (1);
wherein the method more especially further comprises the following step:
determining the geometric design of each sub-portion (8), more especially depending on the received speed.

7. A method according to any one of the preceding claims, further comprising the following step:
identifying objects in the environment of the vehicle (1);
wherein the determination of the portion (6) of the environment that the environmental map is intended to represent is additionally dependent on the identified objects in the environment of the vehicle (1);
wherein the method more especially further comprises the following step:
determining the geometric design of each sub-portion (8), more especially depending on identified objects in the environment of the vehicle (1).

8. A method according to any one of the preceding claims,
wherein the environmental map comprises at least two planes, wherein each plane represents a portion (6) of the environment and comprises cells which each represent a sub-portion (8) from the portion in question of the environment of the vehicle,
wherein each cell is associated with occupancy information which is based on the probability of the presence of an object or part of an object in the sub-portion associated with the cell in question; wherein the method further comprises the following step:
determining the occupancy information for each cell, more especially wherein the occupancy information for cells of a plane is based on measurements of one of at least two sensor systems.

9. A device, comprising electronic processing means and at least one interface to a sensor system, wherein the device is designed to carry out one of the above methods.

10. A computer program, which, when run by a computer, prompts the computer to carry out a method according to any one of claims 1 to 8.

## Revendications

1. Procédé permettant de se procurer une carte d'environnement pour un véhicule selon lequel :
la carte d'environnement représente un segment (6) de l'environnement et comporte des cellules qui sont respectivement associées à un sous-segment (8) du segment (6) de l'environnement du véhicule (1),
à chaque cellule est associée une information d'occupation qui se base sur la probabilité de la présence d'un objet ou d'une partie d'un objet dans le sous-segment (8) associé à la cellule concernée,
le véhicule (1) comprend un groupe d'au moins deux systèmes d'assistance du conducteur qui sont chacun réalisés pour prendre un état actif et un état inactif, et qui nécessitent à l'état actif des informations d'occupation concernant des segments de l'environnement de véhicule ne se chevauchant respectivement au moins pas totalement,,
le procédé comprenant des étapes consistant à :
déterminer le(les) système(s) d'assistance du conducteur qui est(sont) à l'état actif,
déterminer le segment (6) de l'environnement que doit représenter la carte d'environnement sur le fondement du segment ou des segments pour lequel ou lesquels le système d'assistance du conducteur ou les systèmes d'assistance du conducteur nécessite(nt) des informations d'occupations à l'état actif,
le segment (6) l'environnement qui doit représenter la carte d'environnement comportant en particulier le(les) segment(s) pour lequel(lesquels) le système d'assistance du conducteur ou les systèmes d'assistance du conducteur nécessite(nt) des informations d'occupation à l'état actif.

2. Procédé conforme à la revendication 1,
selon lequel
pour chaque segment pour lequel un système d'assistance du conducteur nécessite à l'état actif des informations d'occupation, sont également définis les sous-segments (8) qui sont dans ce segment,
le procédé comprenant en outre des étapes consistant à :
déterminer le sous-segment (8) de l'environnement qui doit représenter la carte d'environnement,
dans des zones dans lesquelles se chevauchent des segments, pour lesquels les systèmes d'assistance du conducteur nécessitent des informations d'occupation à l'état actif, choisir les sous-segments prédéfinis (8) qui ont la plus petite dimension.

3. Procédé conforme à l'une des revendications précédentes, comprenant en outre une étape consistant à :
déterminer l'information d'occupation qui est associée à une cellule de la carte d'environnement sur le fondement de mesures d'un premier capteur et de mesures d'un second capteur.

4. Procédé conforme à l'une des revendications précédentes, comprenant en outre une étape consistant à :
recevoir la direction de déplacement du véhicule (1),
la détermination du segment (6) de l'environnement que doit représenter la carte d'environnement étant en outre dépendant de la direction de déplacement reçue du véhicule (1),
le procédé comprenant en outre une étape consistant à :
déterminer la configuration géométrique de chaque sous-segment (8) en particulier en fonction de la direction de déplacement reçue.

5. Procédé conforme à l'une des revendications précédentes, comprenant en outre des étapes consistant à :
recevoir l'angle de braquage des roues du véhicule (1),
la détermination du segment (6) de l'environnement que la carte d'environnement doit représenter étant en outre dépendant de l'angle de braquage du véhicule (1) reçu,
le procédé comprenant en particulier en outre une étape consistant à :
déterminer la configuration géométrique de chaque sous-segment (8) en particulier en fonction de l'angle de braquage reçu.

6. Procédé conforme à l'une des revendications précédentes, comprenant en outre une étape consistant à :
recevoir la vitesse du véhicule (1),
la détermination du segment (6) de l'environnement que la carte d'environnement doit représenter étant en outre fonction de la vitesse du véhicule (1) reçue,
le procédé comprenant en particulier en outre une étape consistant à :
déterminer la configuration géométrique de chaque sous-segment (8) en particulier en fonction de la vitesse reçue.

7. Procédé conforme à l'une des revendications précédentes, comprenant en outre une étape consistant à :
identifier des objets dans l'environnement du véhicule (1),
la détermination du segment (6) de l'environnement que la carte d'environnement doit représenter étant en outre fonction des objets identifiés dans l'environnement du véhicule (1),
le procédé comprenant en outre en particulier une étape consistant à :
déterminer la configuration géométrique de chaque sous-segment (8) en particulier en fonction d'objets identifiés dans l'environnement du véhicule (1).

8. Procédé conforme à l'une des revendications précédentes,
selon lequel
la carte d'environnement comporte au moins deux plans,
chaque plan représentant un segment (6) de l'environnement et comporte des cellules qui représentent chacune un sous-segment (8) du segment respectif de l'environnement du véhicule,
à chaque cellule est associée une information d'occupation qui est basée sur la probabilité de la présence d'un objet ou d'une partie d'un objet dans le sous-segment associé à la cellule respective,
le procédé comprenant en outre une étape consistant à :
déterminer l'information d'occupation pour chaque cellule, et en particulier l'information d'occupation pour des cellules d'un plan étant basée sur des mesures d'un système de capteur parmi au moins deux systèmes de capteurs.

9. Dispositif comprenant des moyens de traitement électroniques et au moins une interface avec un système de capteurs, ce dispositif étant réalisé pour permettre la mise en oeuvre du procédé susmentionné.

10. Programme d'ordinateur qui, lors de son exécution par un calculateur permet à ce calculateur la mise en oeuvre d'un procédé conforme à l'une des revendications 1 à 8.
